# EUROPÄISCHE PATENTSCHRIFT

(11) **EP 3 778 082 B1**
(45) Veröffentlichungstag und Bekanntmachung des Hinweises auf die Patenterteilung: **04.05.2022**
(21) Anmeldenummer: 19191662.6
(22) Anmeldetag: 14.08.2019
(51) Int. Cl.: B23B 31/16, B23Q 1/00, B23B 31/107

(54) **NULLPUNKT-SPANNVORRICHTUNG**
ZERO POINT CLAMPING DEVICE
DISPOSITIF DE SERRAGE À POINT ZÉRO

(43) Veröffentlichungstag der Anmeldung: 17.02.2021
(73) Patentinhaber: SMW-AUTOBLOK Spannsysteme GmbH, 88074 Meckenbeuren (DE)
(72) Erfinder: MARQUART, Jürgen, 88094 Markdorf (DE); MAURER, Eckhard, 88094 Oberteuringen (DE)
(74) Vertreter: Engelhardt, Volker

(56) Entgegenhaltungen:
- WO-A1-2011/137884
- DE-C- 328 184

## Beschreibung

Die Erfindung bezieht sich auf eine Nullpunkt-Spannvorrichtung nach dem Oberbegriff des Patentanspruches 1, durch die ein Gegenstand zentriert und wiederholungsgenau im Raum fixiert ist. Eine Nullpunkt-Spannvorrichtung mit den Merkmalen des Oberbegriffs des Patentanspruchs 1 ist aus der DE 328 184 C bekannt.

Solche Spannvorrichtungen werden an Werkzeugmaschinen zur Abstützung von zu bearbeitenden Gegenständen, insbesondere von rotationssymmetrischen oder kubischen Werkstücken, benötigt, denn diese Werkstücke sind in Serie zu bearbeiten und demnach ohne Zeitverlust auszuwechseln. Dabei soll die vorgegebene Bearbeitungsposition des Werkstückes bezogen auf eine Bezugsgröße, die als sog. Nullpunkt definiert ist, beibehalten sein, um zu vermeiden, dass eine erneute Ausmessung der Werkstückposition erforderlich ist. Demnach wird der Nullpunkt bezogen auf die Werkzeugmaschine oder deren Werkzeugtisch festgelegt und zu diesem die räumliche Position des eingespannten Werkstückes ermittelt. Der Nullpunkt dient demnach als Bezugsgröße für die Bearbeitungsposition des Werkstückes. Beim Austauschen der Werkstücke soll folglich ein identischer Abstand zu der vorgegebenen Bezugsgröße (Nullpunkt) vorhanden sein.

Eine weitere Nullpunkt-Spannvorrichtung ist beispielsweise der EP 1 886 751 B1 zu entnehmen. Die Spannvorrichtung besteht aus einem Gehäuse, in das eine Aufnahmeöffnung eingearbeitet ist. In die Aufnahmeöffnung kann ein Haltebolzen oder Trägerteil eingesetzt sein, der über seitlich in dem Gehäuse angeordnete Spannschieber festgesetzt ist. Die Spannschieber sind dabei senkrecht zu der Zentrierachse des Haltebolzens angeordnet und bewegen sich somit in radialer Richtung in das Innere der Aufnahmeöffnung und nach außen, um diese freizugeben. Die Spannschieber gelangen in einen reifschlüssigen Wirkkontakt mit dem Haltebolzen, durch den dieses im Spannzustand festgesetzt ist.

Die Spannschieber werden synchron mittels eines axial betätigbaren Stellkolbens betätigt. Zwischen der Stirnseite des Stellkolbens, der als Ring oder Zylinder ausgestaltet ist, und den jeweiligen Spannschiebern ist eine geneigte Fläche oder schiefe Ebene vorgesehen, so dass über die Geometrie der schrägen Fläche bzw. schiefe Ebene die axiale Zustellbewegung des Stellkolben in eine radiale Zustellbewegung für die Spannschieber umgewandelt ist.

Nachteiliger Weise hat sich für solche Spannvorrichtungen herausgestellt, dass diese eine sehr hohe Baumessung benötigen, denn die axialen Zustellbewegungen des Stellkolben sind in dem Gehäuse abzustützen. Zudem ist der Zustellweg der Spannschieber äußerst gering, denn durch die schrägen Flächen zwischen dem Stellkolben und den jeweiligen Spannschieber ist diese Bewegungsmöglichkeit begrenzt. Gleichzeitig führt die kraftschlüssige Wirkverbindung zwischen dem Stellkolben und den Spannschiebern dazu, dass der Außendurchmesser des Gehäuses erheblich zu vergrößern ist, um überhaupt eine entsprechende radiale Bewegungsmöglichkeit für die Spannschieber zur Verfügung zu stellen. Folglich baut das Gehäuse der bekannten Spannvorrichtung sowohl in seiner Höhe als auch in seinem Außenumfang entsprechend groß sind. Oftmals sind jedoch die vorhandenen Räume oder Platzverhältnisse an Werkzeugmaschinen begrenzt, so dass solche Nullpunkt-Spannvorrichtungen überhaupt nicht eingesetzt werden können.

Die vorgenannten angesprochenen Nachteile sollen durch die Spannvorrichtung nach der DE 10 2010 010 898 A1 ausgeräumt sein. Durch eine derartige Spannvorrichtung sollen nämlich die axialen Zustellbewegungen eines Hubkolbens durch eine Drehbewegung eines Treibringes ersetzt sein. Zu diesem Zweck ist der Treibring drehbar um die Aufnahmeöffnung angeordnet und kann mittels einer Gewindespindel im bzw. entgegen des Uhrzeigersinns verdreht sein. In den Treibring sind Führungsnuten eingearbeitet, die spiralförmig bezogen auf die Aufnahmeöffnung verlaufen. Somit weisen die beiden Enden der Führungsnuten einen unterschiedlichen Abstand zu dem Mittelpunkt der Aufnahmeöffnung auf.

In die Führungsnuten ist jeweils ein Nocken eingesetzt, der mit dem jeweiligen Spannschieber gekoppelt ist. Durch die Drehbewegung des Treibringes entstehen somit radiale Zustellbewegungen für die drei Spannschieber. Die Anordnung von Führungsnuten und Nocken kann auch umgekehrt ausgeführt sein.

Als nachteilig bei einem derartigen Spannsystem hat sich herausgestellt, dass die Fertigungstoleranzen der trieblich miteinander gekoppelten Bauteile, nämlich Treibring, Führungsnuten, Nocken und Spannschieber äußerst gering sein müssen, da anderenfalls ein Spiel, insbesondere zwischen Führungsnuten und Nocken, entsteht, durch das die Drehbewegung des Treibrings nicht vollständig auf die Spannschieber übertragen ist. Die erforderlichen Fertigungstoleranzen in einer derart eingeschränkten Bandbreite für mehrere Bauteile erhöhen jedoch zwangsläufig die Fertigungskosten.

Zudem hat sich nachteiliger Weise gezeigt, dass die Betätigungskräfte für die erforderlichen Drehbewegungen des Treibringes nicht beherrschbar sind. Dies bedeutet, dass eine zu geringe Betätigungskraft eine zeitintensive bzw. langwierige Einspannung zur Folge hat und dass bei erhöhten Betätigungskräften Beschädigungen an den trieblich miteinander gekoppelten Bauteilen, insbesondere zwischen der Führungsnut des Treibringes und der Nocken der Spannschieber, entstehen. Die Betätigungskräfte sind nämlich nicht einstellbar und folglich können die auf die Gewindespindel einwirkenden Betätigungskräfte erhebliche Schäden an den Bauteilen der Spannvorrichtung verursachen.

Außerdem sind eine Vielzahl von Umdrehungen notwendig, um die Spannschieber aus der geöffneten Stellung in die Spannstellung zu überführen. Solche Einspann- bzw. Auswechselvorgänge sind daher sehr zeitintensiv und dies erhöht die Produktionskosten, denn eine Vielzahl von Gegenständen sind auszutauschen.

Es ist daher Aufgabe der Erfindung, eine Nullpunkt-Spannvorrichtung der eingangs genannten Gattung derart weiterzubilden, dass durch diese zum einen eine zuverlässige, dauerhafte sowie wiederholungsgenaue Fixierung einer Vielzahl von Werkstücken, Werkzeugen, Paletten oder sonstigen Gegenständen ermöglicht ist und dass zum anderen das Gehäuse der Spannvorrichtung äußerst kompakt baut, dass also dessen Außenabmessung in Höhe und Durchmesser äußerst gering gestaltet werden kann. Zudem sollen die Auswechselvorgänge der einzuspannenden Gegenstände oder Trägerteile ohne zeitliche Verzögerung möglich sein und die manuell oder maschinell aufgebrachte Betätigungskraft soll durch möglichst eine Umdrehung des Betätigungselementes begrenzt sein.

Diese Aufgaben sind durch eine Nullpunkt-Spannvorrichtung gemäß dem Patentanspruch 1 gelöst.

Weitere vorteilhafte Weiterbildungen der Erfindung ergeben sich aus den Unteransprüchen.

Dadurch, dass in dem Betätigungselement zwei zueinander beabstandete Gewindegänge eingearbeitet sind, deren jeweilige Gewindegänge identische Steigungen aufweisen und gegenläufig geneigt zueinander ausgestaltet sind, dass in jedem Gewindegang ein Antriebszapfen eingesetzt ist, der mit dem jeweiligen Gewindegang in einer trieblichen Wirkverbindung steht, derart, dass mittels der Drehung des Betätigungselementes die Antriebszapfen entlang der Rotationsachse des Betätigungselementes bewegbar sind, dass in dem Gehäuse mindestens zwei Antriebssegmenten schwimmend gelagert sind, die sich bogenförmig um die Zentrierachse der Aufnahmeöffnung erstrecken, dass zwei der Antriebssegmente über eine der jeweiligen Antriebszapfen mit dem Betätigungselement trieblich gekoppelt sind, dass zwischen den beiden mit dem Betätigungselement verbundenen Antriebssegmenten und dem benachbart dazu angeordneten Antriebssegment jeweils ein Drehbolzen zur Bildung eines Drehgelenkes vorgesehen ist und dass jeder Spannschieber mit einem der Antriebssegmente verbunden ist, ist zum einen eine geringe Bauhöhe des Gehäuses geschaffen und die Auswechselvorgänge der einzuspannenden Gegenstände oder Trägerteile können schnell und mit einer begrenzten Betätigungskraft vorgenommen werden, da die in das Betätigungselement eingearbeiteten Gewindegänge eine vorgegebene Steigung aufweisen und deren Länge begrenzt ist.

Die Ausgestaltung des Betätigungselementes mit zwei gegenläufigen Gewindegängen , die zwei unterschiedliche Steigungen aufweisen, führt zudem dazu, dass maximal eine Umdrehung des Betätigungselementes erforderlich ist, um die drei Spannschieber aus der Ausgangsposition in die Spannposition zu überführen, denn die erste Neigung ist derart geneigt, dass ein Eilhub für die Spannschieber entsteht und die zweite Neigung gibt durch ihren Verlauf den Spannvorgang vor. Die Abmessung der Seitenwände mit den zwei unterschiedlichen Neigungsverläufen ist dabei derart an die Geometrie des Gehäuses und der einzuspannenden Gegenstände oder Trägerteile angepasst, dass die Spannschieber den Eilhub beenden, sobald die dem Gegenstand oder Trägerteile zugewandten freien Enden der Spannschieber mit diesem in Wirkkontakt gelangen bzw. treten. Für den Eilhub werden geringe Zustellkräfte benötigt und es soll eine hohe Geschwindigkeit für die radiale Zustellung der Spannschieber zur Verfügung stehen. Für den Spannvorgang ist eine höhere Zustellkraft erforderlich, so dass die Neigung der Seitenwand gegenüber der Neigung der Seitenwand für den Eilhub flacher ausgestaltet ist.

Da die vom Betätigungselement übertragenen Betätigungskräfte in eine axiale Bewegung der Antriebszapfen umgewandelt ist, entstehen vorteilhafter Weise eine Bewegungsüberlagerung der Antriebssegmente. Diese sind nämlich zum einen schwimmend auf einer Auflagefläche des Gehäuses gelagert und können sich demnach in einem durch das Gehäuse vorgegebenen Bereich frei bewegen und zum anderen sind die benachbarten Antriebssegmente mittels eines Drehzapfens verbunden, der somit ein Drehgelenk bildet. Folglich entsteht sowohl eine Drehbewegung zwischen den benachbarten Antriebssegmenten als auch eine translatorische Bewegung in Richtung des Betätigungselementes, wodurch die drei Spannschieber synchron und radial in Richtung der Aufnahmeöffnung gedrückt sind. Sobald das Betätigungselement in entgegengesetzter Richtung gedreht ist, werden die Antriebssegmente in ihre Ausgangsposition zurückgeführt, wodurch sich die Spannschieber radial nach außen bewegen.

Die Lagerung der Antriebssegmente erfolgt dabei ausschließlich durch die drei mit diesen fest verbundenen Spannschieber, die wiederum in radial verlaufende Bohrungen gehalten sind, die in dem Gehäuse eingearbeitet sind.

Zudem verlaufen die Antriebssegmente in Aufnahmetaschen, die im Wesentlichen bogenförmig ausgestaltet und in den jeweiligen Spannschiebern vorgesehen sind. Die beiden gegenüberliegenden Seitenwände der Aufnahmetaschen weisen zwei unterschiedliche Abstände zu den Antriebssegmenten auf, wodurch die Spannschieber bei der Bewegung der Antriebssegmente nicht verkanten.

Die drei Spannschieber fixieren den eingesetzten Gegenstand bzw. das Trägerteil in der Aufnahmeöffnung und die Zentrierung der eingesetzten Gegenstände oder Trägerteile bezogen auf die Zentrierachse der Aufnahmeöffnung erfolgt durch den im Eingangsbereich der Aufnahmeöffnung an gearbeiteten Zentrierkonus. Die freien Enden der Spannschieber, die dem Gegenstand oder Trägerteil zugewandt sind, weisen nämlich eine geneigte Spannfläche auf, die mit einer gegenläufig ausgestalteten Spannebene des Gegenstandes oder Trägerteil zusammenwirkt, und zwar derart, dass der Gegenstand oder Trägerteil in das Innere des Gehäuses eingedrückt bzw. eingezogen ist und dadurch der mit dem Zentrierkonus der Aufnahmeöffnung mit dem dazu korrespondierenden Spannkonus des Gegenstandes oder Trägerteil in Anlage gelangt. Folglich ist der Gegenstand bzw. das Trägerteil fluchtend zu der Zentrierachse der Aufnahmeöffnung angeordnet; die Symmetrieachse der Gegenstände bzw. Trägerträgerteile verläuft koaxial zu der Zentrierachse der Aufnahmeöffnung.

Durch die schwimmende Lagerung der Antriebssegmente auf einer in dem Gehäuse vorgesehenen Auflagefläche führt demzufolge dazu, dass die Fertigungstoleranzen für die trieblich miteinander gekoppelten Bauteile in einem größeren Toleranzbereich liegen können, ohne dass die Spannwirkung und die Bewegungen der Spannschieber eingeschränkt sind.

In der Zeichnung ist eine erfindungsgemäße Nullpunkt-Spannvorrichtung dargestellt, die nachfolgend näher erläutert ist. Im Einzelnen zeigt:
- Figur 1: eine Nullpunkt-Spannvorrichtung, bestehend aus einem Gehäuse, das an einem Maschinentisch einer Werkzeugmaschine befestigt ist, in dem eine Aufnahmeöffnung eingearbeitet ist, in die ein Trägerteil einsetzbar und zentriert in der Aufnahmeöffnung fixiert ist, an dem ein Gegenstand befestigt ist, im Schnitt,
- Figur 2: die Spannvorrichtung gemäß Figur 1 in Explosionsdarstellung und in perspektivischer Ansicht, mit drei Spannschiebern, die mit jeweils einem Antriebssegment gekoppelt sind und mit einem in dem Gehäuse drehbar gelagerten Betätigungselement, das über zwei Antriebszapfen mit zwei der drei Antriebssegmente verbunden ist, sowie mit zwei Drehzapfen zwischen jeweils einem der benachbarten Antriebssegmente, zur Bildung eines Drehgelenkes,
- Figur 3a: die Spannvorrichtung gemäß den Figuren 1 und 2, in Draufsicht und in der Ausgangsstellung,
- Figur 3b: die Spannvorrichtung gemäß den Figuren 1 und 2, in Draufsicht und in Spannstellung,
- Figur 4: der Zusammenbau der Antriebssegmente und deren triebliche Kopplung mit dem Betätigungselement und die Bildung eines Drehgelenkes über die Drehzapfen zwischen zwei benachbarten Antriebssegmenten und mit der Anordnung der Spannschieber an den jeweiligen Antriebssegmenten, in perspektivischer Darstellung gemäß Figur 2,
- Figur 5: das Betätigungselement gemäß Figur 2, als Abwicklung, mit zwei in dieses eingearbeitete Steigungen zur Bildung eines Eilhubs und der Spannzustellung und
- Figur 6: ein vergrößerter Ausschnitt des Gehäuses gemäß Figur 1, zwischen dem Betätigungselement, dem Antriebszapfen und einem der Antriebssegmente.

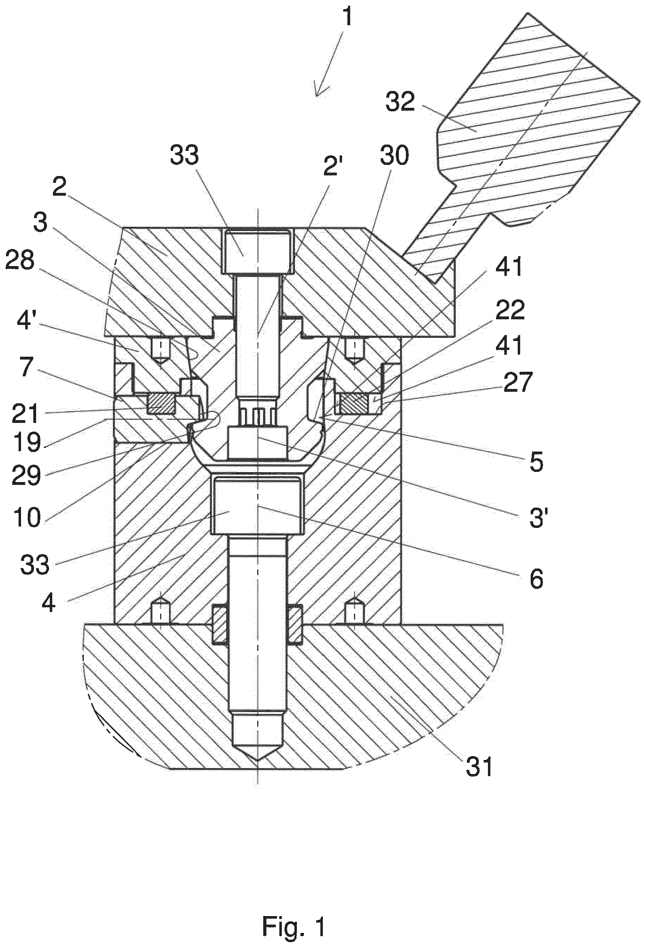

In Figur 1 ist eine Nullpunkt-Spannvorrichtung 1 zu entnehmen, durch die ein Gegenstand 2, an dem einer der Gegenstände 2 befestigt ist, insbesondere ein Werkstück, ein Werkzeug oder eine Palette, oder ein Trägerteil 3 zentriert und wiederholungsgenau zu einem Maschinentisch 31 einer nicht dargestellten Werkzeugmaschine zu positionieren ist. Die Spannvorrichtung 1 dient dabei als Schnellwechselsystem, um baugleiche Gegenstände 2 mittels eines Werkzeugs 32 bearbeiten zu können, ohne dass die Position des Gegenstandes 2 nach dem Auswechselvorgang erneut zu kalibrieren ist.

Dabei ist es selbstverständlich, dass der Gegenstand 2 unmittelbar mit der Spannvorrichtung 1 verbunden werden kann. Im gezeigten Ausführungsbeispiel ist der Gegenstand 2 mittels einer Befestigungsschraube 33 an dem Trägerteil 3 arretiert. Diese Baueinheit ist vormontiert, so dass das Trägerteil 3 unmittelbar mit der Spannvorrichtung 1 - wie dies nachfolgend näher erläutert ist - fixiert und zu einer Bezugsachse ausgerichtet werden kann.

Zu diesem Zweck besteht die Spannvorrichtung 1 aus einem Gehäuse 4, in das eine Aufnahmeöffnung 5 eingearbeitet ist. Das Trägerteil 3 ist dabei in die Aufnahmeöffnung 5 eingesteckt und soll durch den nachfolgend beschriebenen Spannvorgang koaxial zu der Zentrierachse 6 der Aufnahmeöffnung 5 ausgerichtet sein. Die Zentrierachse 6 ist dabei die Symmetrielinie der Aufnahmeöffnung 5, die senkrecht zu dem Maschinentisch 31 verläuft. Das Trägerteil 3 und der Gegenstand 2 weisen ebenso jeweils eine Symmetrieachse 2' bzw. 3' auf, die im eingespannten Zustand des Trägerteils 3 bzw. des Gegenstandes 2 koaxial zu der Zentrierachse 6 ausgerichtet ist.

Zur Fixierung des Trägerteils 3 dienen drei Spannschieber 7, 8, 9, die axial beweglich in einer in dem Gehäuse 4 eingearbeiteten Bohrung 10 gelagert sind. Die Bohrung 10 und die drei Spannschieber 7, 8, 9 verlaufen radial zu der Aufnahmeöffnung 5. Die Spannschieber 7, 8, 9 münden in die Aufnahmeöffnung 5 und können durch weitere Zustellbewegungen in das Innere der Aufnahmeöffnung 5 bewegt sein, wodurch ein Wirkkontakt zwischen den Spannschiebern 7, 8, 9 und dem Trägerteil 3 entsteht

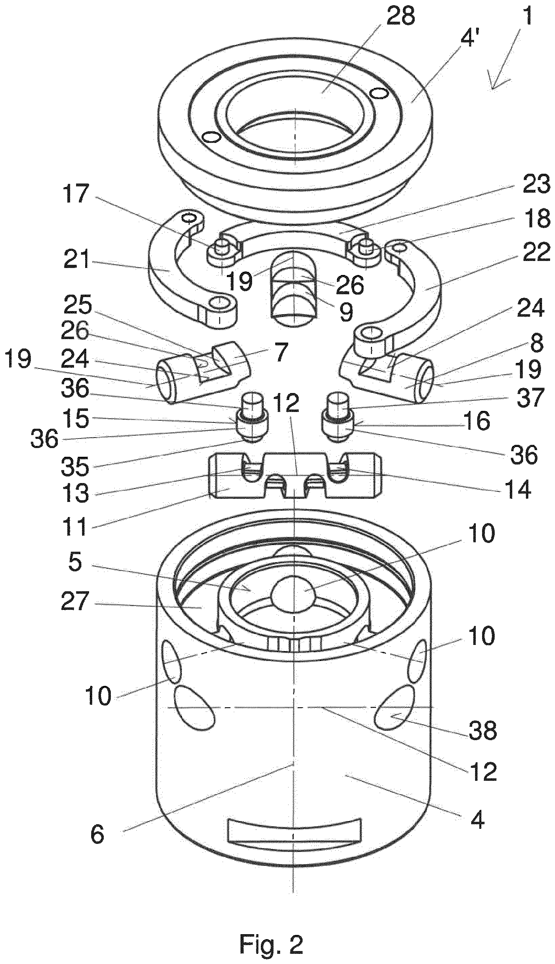

Insbesondere Figur 2 kann die Anordnung sämtlicher für die Betätigung der drei Spannschieber 7, 8, 9 erforderlichen Bauteile entnommen werden. Für eine maschinelle oder manuelle Betätigung der drei Spannschieber 7, 8, 9 ist zunächst ein Betätigungselement 11 vorgesehen, das in einer in dem Gehäuse 4 eingearbeiteten Aufnahme 38 drehbar gelagert ist. Das Betätigungselement 11 weist eine Rotationsachse 12 auf, die tangential und beabstandet zu der Aufnahmeöffnung 5 verläuft.

In das Betätigungselement 11 sind zwei Gewindegänge 13, 14 eingearbeitet, derart, dass die Gewindegänge identisch und gegenläufig geneigt ausgestaltet sind.

Jeweils ein Antriebszapfen 15 bzw. 16 ist zunächst zur Übertragung des Drehmomentes trieblich mit dem Betätigungselement 11 verbunden. Dabei weisen die Antriebszapfen 15, 16 drei Teilabschnitte 35, 36 und 37 mit unterschiedlich groß bemessenen Durchmessern auf. Der erste Teilabschnitt 35 ist dabei einem der Gewindegänge 13 oder 14 zugeordnet und in diesen eingesetzt. Der zweite Teilabschnitt 36 überragt die beiden benachbarten Teilabschnitte 35 und 37 radial nach außen und ist einer in dem Gehäuse 4 eingearbeiteten Führungsnut 20 zugeordnet. Die Außenflanken des Teilabschnittes 36 liegen dabei linear an den Seitenwänden der Führungsnuten 20 an und werden somit von dieser abgestützt. Der Teilabschnitt 37 steht aus dem Gehäuse 4 über und kann daher mit einem von drei Antriebssegmenten 21 oder 22 gekoppelt sein.

Die drei Antriebssegmente 21, 22 und 23 weisen eine identische Kontur oder Krümmung auf und sind im montierten Zustand bogenförmig um die Zentrierachse 6 bzw. die Aufnahmeöffnung 5 angeordnet. Zur Verbindung der drei Antriebssegmente 21 mit 23 bzw. 22 mit 23 sind zwei Drehzapfen 17, 18 vorgesehen, durch die ein Drehgelenk gebildet ist. Folglich sind die beiden seitlichen Antriebssegmente 21 und 22 über die Antriebszapfen 15 und 16 mit dem Betätigungselement 11 trieblich verbunden und die dazu gegenüberliegenden freien Enden der Antriebssegmente 21 und 22 sind über die Drehzapfen 17 bzw. 18 mit dem zu dem Betätigungselement 11 gegenüberliegenden Antriebssegment 23 nach Art eines Drehgelenks gekoppelt.

In die drei Spannschieber 7, 8, 9 ist eine Aufnahmetasche 24 eingearbeitet, in die das jeweilige Antriebssegment 21, 22 oder 23 eingesetzt ist. Die den Antriebssegmenten 21, 22, 23 zugeordneten Seitenwände 25 und 26 der Aufnahmetaschen 24 sind dabei konkav gebogen, derart, dass die Abstände im Bereich der Mittelachse 19 der Spannschieber 7, 8, 9 näher zueinander angeordnet sind als die beiden Randbereiche der Aufnahmetaschen 24. Dies soll eine Verkantung zwischen den Antriebssegmenten 21, 22, 23 und den Spannschiebern und 7, 8, 9 verhindern. Demnach bilden die Antriebssegmente 21, 22, 23 mit den jeweiligen Spannschiebern und 7, 8, 9 ein Antriebspaar.

Durch die Anordnung der Spannschieber 7, 8, 9 in der Bohrung 10 des Gehäuses 4 ist dabei gewährleistet, dass der Verbund der Antriebspaare 7 mit 21, 8 mit 22 und 9 mit 23 an dem Gehäuse 4 abgestützt und gehalten ist. Das Gehäuse 4 kann mittels eines Deckels 4' verschlossen sein. Demnach können sämtliche Bauteile in das geöffnete Gehäuse 4 eingesetzt sein und der Deckel 4' verschließt nach der Montage die eingebauten Bauteile.

Um die nachfolgend näher erläuterten Bewegungsabläufe der Verbundpaare 7 mit 21, 8 mit 22 und 9 mit 23 zu ermöglichen, sind die Antriebssegmente 21, 22 und 23 auf einer Auflagefläche 27 aufgelegt und folglich schwimmend gelagert. Die Breite der Auflagefläche 27 ist dabei größer bemessen als die Breite der Antriebssegmente 21, 22 und 23, so dass die Antriebssegmente 21, 22, 23 schwimmend auf der Auflagefläche 27 angeordnet. Ausschließlich die Seitenwände des Gehäuses begrenzen die radiale Bewegungsmöglichkeit der Antriebssegmente 21, 22, 23.

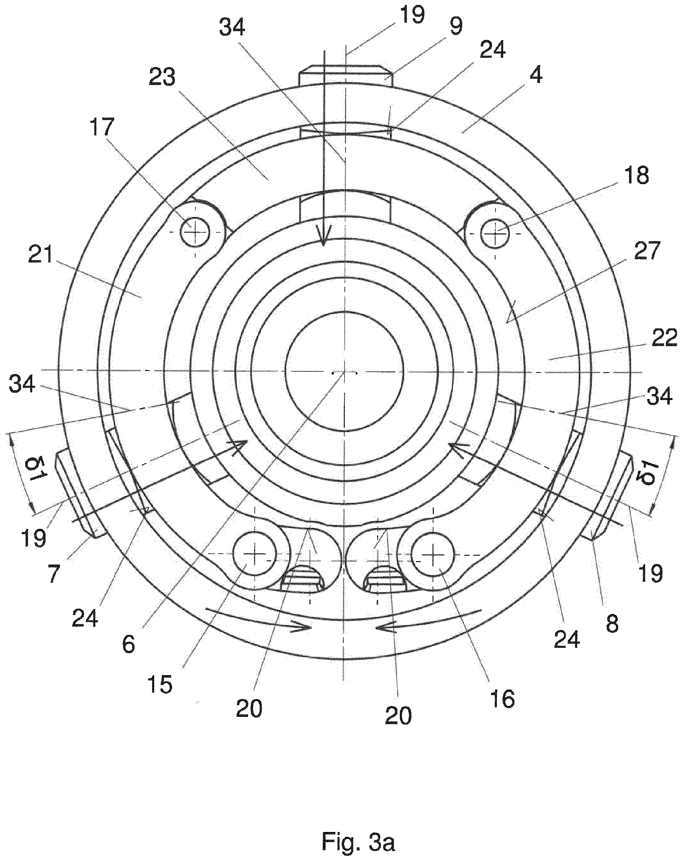

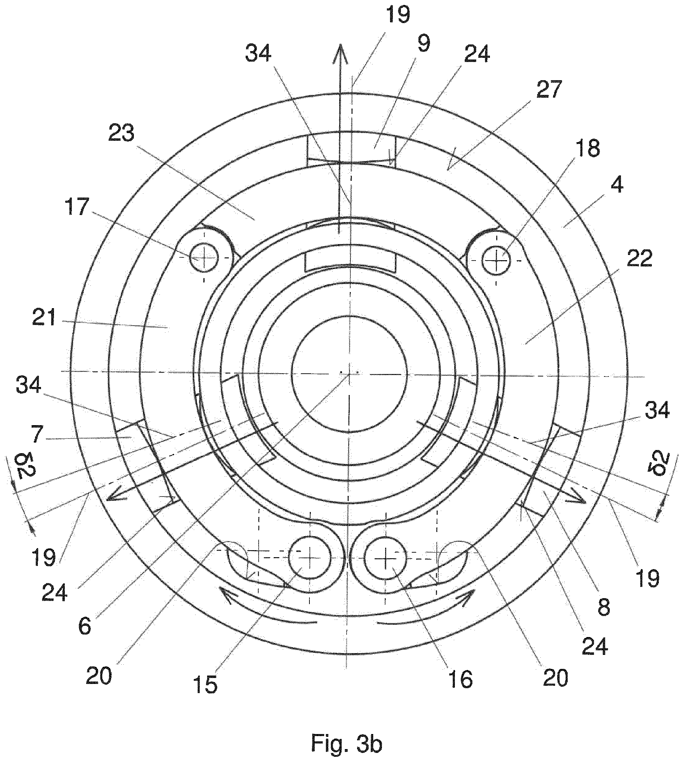

In den Figuren 3a und 3b ist der Bewegungsablauf ausgehend von einer Ausgangsposition zu einer Spannstellung abgebildet. Gemäß Figur 3a ist die Aufnahmeöffnung 5 vollständig offen, da die Spannschieber 7, 8, 9 fluchtend zu der Innenwand der Aufnahmeöffnung 5 verlaufen und diese somit freigeben. Folglich kann ein Gegenstand 2 oder das Trägerteil 3 in die Aufnahmeöffnung 5 eingesetzt oder entnommen werden.

Die Antriebszapfen 15 und 16 befinden sich am Anfang des jeweiligen Gewindeganges 13 bzw. 14 des Betätigungselementes 11. Sobald das Betätigungselement 11 im Uhrzeigersinn gedreht ist, bewegen sich die Antriebszapfen 15,16 aufeinander zu, und zwar entlang der Rotationsachse 12 des Betätigungselementes 11. Wie bereits erläutert, ist der zweite Teilabschnitt 36 der Antriebszapfen 15 und 16 in der in dem Gehäuse 4 eingearbeiteten Führungsnuten 20 abgestützt, so dass die Antriebszapfen 15,16 durch die Drehung des Betätigungselementes 11 axial aufeinander zugestellt sind.

Durch die axiale Zustellung der Antriebszapfen 15 und 16 werden die Antriebssegmente 21 und 22 zum einen um die Drehzapfen 17 und 18 nach Art eines Drehgelenkes verschwenkt und gleichzeitig werden die Drehzapfen 17 und 18 translatorisch in Richtung des Betätigungselementes 11 bzw. der Antriebszapfen 15 und 16 bewegt. Dies führt dazu, dass das dritte Antriebssegment 23 auf der Auflagefläche 27 in Richtung der Aufnahmeöffnung 5 gezogen ist. Da die drei Spannschieber 7, 8, 9 mit den jeweiligen Antriebssegmenten 21, 22 oder 23 verbunden und in den Bohrungen 10 abgestützt sind, werden diese radial in das Innere der Aufnahmeöffnung 5 eingeschoben und gelangen in Wirkkontakt mit dem Trägerteil 3 oder dem Gegenstand 2.

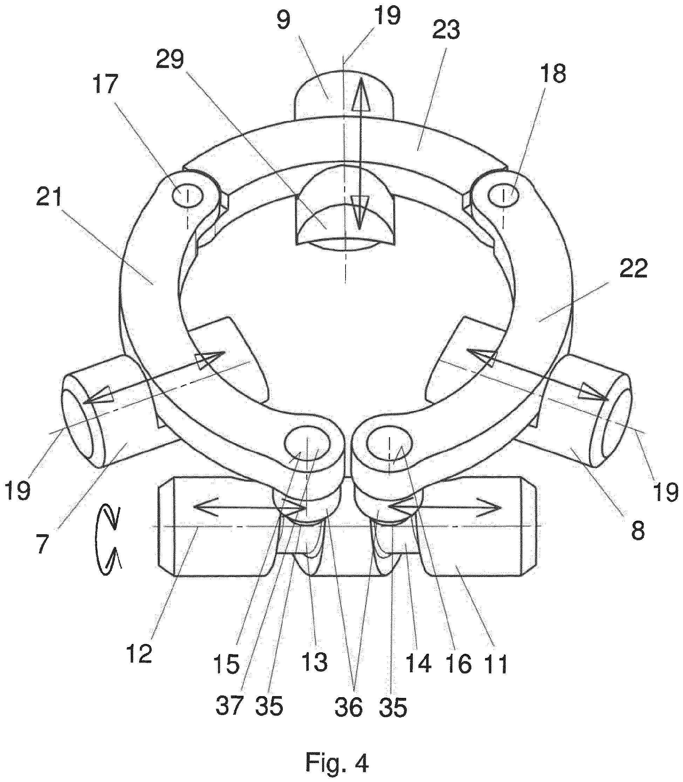

In Figur 4 ist der Bewegungsablauf der Verbundpaare 7 mit 21, 8 mit 22 und 9 mit 23 sowie die Bewegungsabläufe der Antriebszapfen 15 und 16 aufgrund der Drehung des Betätigungselementes 11 zu entnehmen. Der von den Antriebssegmenten 21, 22, 23 in ihrer Ausgangsstellung gebildete Bogen wird folglich durch die Drehung des Betätigungselementes 11 verkleinert, wodurch sich die radiale Zustellbewegungen der drei Spannschieber 7, 8, 9 einstellt. Somit erfolgt eine Übertragung von zwei unterschiedlichen Bewegungsabläufen, nämlich einer Verschwenkbewegung um die Drehzapfen 17, 18 und eine translatorische Bewegung der Antriebssegmente 21, 22, 23 in Richtung des Betätigungselementes 11.

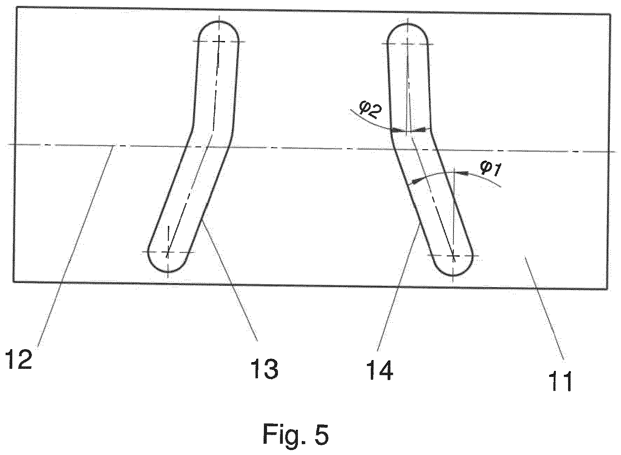

Aus Figur 5 ist ersichtlich, dass die Gewindegänge 13 und 14 des Betätigungselementes 11 zwei unterschiedliche Neigungen oder Steigungen (ϕ₁ und ϕ₂) bezogen auf die Rotationsachse 12 aufweisen. Dabei verläuft die Steigung ϕ₁ bezogen auf die Rotationsachse 12 flacher und die Steigung ϕ₂ nahezu senkrecht, also steiler zu der Rotation 12. Dies führt dazu, dass die Zustellbewegung der Spannschieber 7, 8, 9 in einem Eilhub erfolgt, denn die Steigung ϕ₁ bewirkt eine geringe Zustellkraft verbunden mit einer hohen Zustellgeschwindigkeit. Die Spannschieber 7, 8, 9 befinden sich im Ausgangszustand und stehen noch nicht in Wirkkontakt mit dem eingesetzten Trägerteil 3 oder dem Gegenstand 2. Sobald die Spannschieber 7, 8, 9 in Wirkkontakt mit dem Trägerteil 3 bzw. dem Gegenstand 2 stehen, soll der Spannvorgang erfolgen. Für den Spannvorgang benötigt die Spannvorrichtung 1 eine hohe Zustellkraft und eine geringe Zustellgeschwindigkeit. Dies ist durch die Steigung ϕ₂ in den Gewindegängen 13, 14 erreicht.

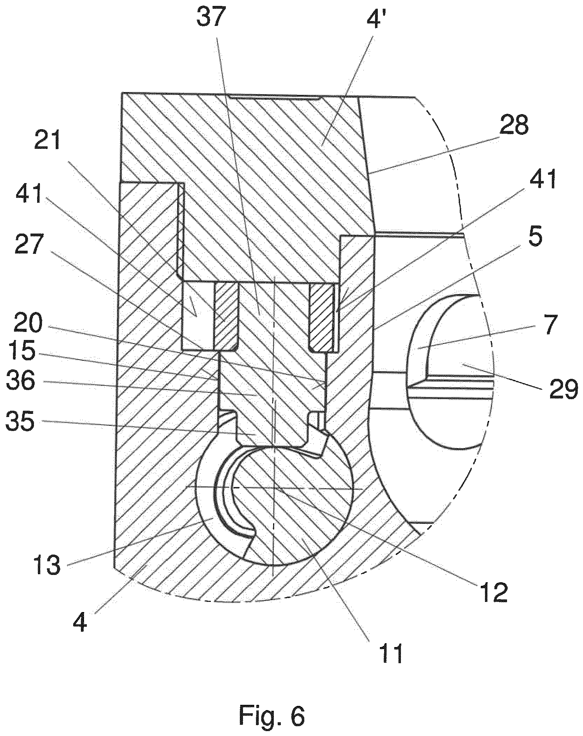

In Figur 6 ist die Überlagerung des Spann- und Fixiervorganges der Nullpunkt-Spannvorrichtung 1 gezeigt. Zunächst ist im Eingangsbereich der Aufnahmeöffnung 5 ein Zentrierkonus 28 angearbeitet. Der Zentrierkonus 28 bildet dabei eine Anlagefläche, gegen die das Trägerteil 3 anzupressen ist. Die Außenwand des Trägerteils 3 bzw. des Gegenstandes 2 ist dabei an den Zentrierkonus 28 angepasst.

Um die Anpressung zu erreichen, sind an den freien Enden der Spannschieber 7, 8, 9, die mit dem Trägerteil 3 bzw. den Gegenstand 2 zusammenwirken, jeweils eine aus der Horizontalen geneigten Spannfläche 29 vorgesehen. Die Spannfläche 29 ist beispielsweise unter einem Winkel von 8° bis 15° gegenüber der Horizontalen geneigt. An dem Trägerteil 3 sind gemäß Figur 1 eine umlaufende Spannebene 30 angearbeitet, deren Neigung an die Ausgestaltung der Spannfläche 29 angepasst ist und mit dieser korrespondiert. Sobald die Spannschieber 7, 8, 9 in Wirkkontakt mit der Spannebene 30 des Trägerteils 3 gelangen, drücken die Spannschieber 7, 8, 9 das Trägerteil 3 nach dem mechanischen Prinzip der schiefen Ebene in das Innere der Aufnahmeöffnung 5; es erfolgt demnach eine axiale Bewegung des Trägerteils 3 innerhalb der Aufnahmeöffnung 5, wodurch das Trägerteil 3 auf den Zentrierkonus 28 aufgedrückt ist. Die radiale Zustellbewegungen der Spannschieber 7, 8, 9 ist demnach durch die geneigte Spannfläche 29 und der Spannebene 30 des Trägerteils 3 in eine axiale Kraftkomponente umgewandelt, so dass zum einen das Trägerteil 3 in der Aufnahmeöffnung 5 durch die Spannschieber 7, 8, 9 fixiert und zum anderen der Zentrierkonus 28 die Ausrichtung des Trägerteils 3 koaxial zu der Zentrierachse 6 bewirkt.

Zudem ist aus Figur 6 zu erkennen, dass der Teilabschnitt 35 des Antriebszapfens 15 in den Gewindegang 13 eingesetzt und durch diesen axial bewegbar ist und dass der Teilabschnitt 36 in der Führungsnut 20 des Gehäuses 4 seitlich abgestützt ist. Zudem kann im Bereich des Antriebssegmente 21 die schwimmende Lagerung entnommen werden, da seitlich zwischen den Innenwänden des Gehäuses 4 und des Außenumfangs des Antriebssegments 21 beidseitig ein entsprechender Luftspalt 41 vorgesehen ist.

In den Figuren ist eine bevorzugte Ausführungsvariante mit den Spannschiebern 7, 8, 9 und drei mit deren trieblich gekoppelten Antriebsegmenten 21, 22 und 23 abgebildet und erläutert. Es ist jedoch ohne Weiteres technisch möglich, die Anzahl der Spannschieber 7, 8 auf zwei zu reduzieren oder mehr als drei zu erhöhen zu verwenden.

Jeder Spannschieber, unabhängig von deren Anzahl, ist mit einer der Antriebssegmente 21, 22 verbunden.

Sollten lediglich zwei Spannschieber 7, 8 und zwei Antriebssegmente 21, 22 gekoppelt sein, dann sind die Antriebssegmente 21, 22 über die Antriebszapfen 15, 16 sowohl mit dem Betätigungselement 11 als auch über den Drehzapfen 17 miteinander verbunden.

## Patentansprüche

1. Nullpunkt-Spannvorrichtung (1) zur zentrischen und wiederholungsgenauen Arretierung eines Gegenstandes (2), insbesondere eines Werkstücks, eines Werkzeugs od. einer Palette, oder einem Trägerteil (3), an dem der jeweilige Gegenstand (2) befestigt ist, bestehend aus:
- einem Gehäuse (4),
- einer in dem Gehäuse (4) eingearbeiteten Aufnahmeöffnung (5), die eine Zentrierachse (6) aufweist, zu der die Symmetrieachse (2' bzw. 3') des Gegenstandes (2) oder des Trägerteils (3) während des Spannvorganges koaxial ausrichtbar ist,
- mindestens zwei Spannschiebern (7, 8 oder 9), die jeweils in einer in dem Gehäuse (4) vorgesehenen Bohrung (10) axial verschiebbar gelagert sind und die in die Aufnahmeöffnung (5) während des Spannzustandes münden und dadurch auf den Gegenstand (2) oder das Trägerteil (3) einwirken und diese fixieren können, und einem in dem Gehäuse (4) drehbar gelagerten Betätigungselement (11), durch das die Spannschieber (7, 8, 9) bewegbar sind, wobei die eine Rotationsachse (12) des Betätigungselementes (11) tangential und beabstandet zu der Aufnahmeöffnung (5) verläuft,
wobei in dem Gehäuse (4) mindestens zwei Antriebssegmente (21, 22, 23) schwimmend gelagert sind, die sich bogenförmig um die Zentrierachse (6) der Aufnahmeöffnung (5) erstrecken,
wobei jeder Spannschieber (7, 8, 9) mit einem der Antriebssegmente (21,22, 23) verbunden ist,
**dadurch gekennzeichnet,**
- **dass** in dem Betätigungselement (11) zwei zueinander beabstandete Gewindegänge (13, 14) eingearbeitet sind, deren jeweilige Gewindegänge (13, 14) identische Steigungen aufweisen und gegenläufig geneigt zueinander ausgestaltet sind,
- **dass** in jedem Gewindegang (13, 14) ein Antriebszapfen (15, 16) eingesetzt ist, der mit dem jeweiligen Gewindegang (13 oder 14) in einer trieblichen Wirkverbindung steht, derart, dass mittels der Drehung des Betätigungselementes (11) die Antriebszapfen (15, 16) entlang der Rotationsachse (12) des Betätigungselementes (11) bewegbar sind,
- **dass** zwei der Antriebssegmente (21, 22) über eine der jeweiligen Antriebszapfen (15, 16) mit dem Betätigungselement (11) trieblich gekoppelt sind,
- und **dass** zwischen den beiden mit dem Betätigungselement (11) verbundenen Antriebssegmenten (21, 22) und den benachbart dazu angeordneten Antriebssegment (21, 22 oder 23) jeweils ein Drehbolzen (17, 18) zur Bildung eines Drehgelenkes vorgesehen ist.

2. Spannvorrichtung nach Anspruch 1,
**dadurch gekennzeichnet,**
**dass** in den jeweiligen Spannschiebern (7, 8, 9) eine U-förmig ausgestaltete Aufnahmetasche (24) eingearbeitet ist, in die das jeweilige Antriebssegment (21, 22, 23) eingesetzt ist.

3. Spannvorrichtung nach Anspruch 2,
**dadurch gekennzeichnet,**
**dass** die dem jeweiligen Antriebssegment (21, 22, 23) zugewandte Seitenwand (25, 26) der Aufnahmetasche (24) derart gebogen sind, dass die Breite der Aufnahmetasche (24) im Bereich der Mittelachse (19) der Spannschieber (7, 8, 9) kleiner bemessen ist als im Bereich der Mantelfläche.

4. Spannvorrichtung nach einem der vorgenannten Ansprüche,
**dadurch gekennzeichnet,**
**dass** die beiden in dem Betätigungselement (11) eingearbeiteten Gewindegänge (13, 14) eine identische Länge aufweisen und dass die Länge des Gewindeganges (13, 14) den Bewegungshub der Spannschieber (7, 8, 9) vorgibt.

5. Spannvorrichtung nach Anspruch 4,
**dadurch gekennzeichnet,**
**dass** die Länge des Gewindeganges (13, 14) maximal einer vollständigen Umdrehung des Betätigungselementes (11) entspricht.

6. Spannvorrichtung nach einem der vorgenannten Ansprüche,
**dadurch gekennzeichnet,**
**dass** die Gewindegänge (13, 14) zwei unterschiedliche Neigungen (ϕ₁, ϕ₂) bezogen auf die Rotationsachse (12) aufweisen und dass die Neigung (ϕ₁) dem Eilhub der Spannschieber (7, 8, 9) und die Neigung (ϕ₂) der Spannbewegung der Spannschieber (7, 8, 9) zugeordnet ist.

7. Spannvorrichtung nach einem der vorgenannten Ansprüche,
**dadurch gekennzeichnet,**
**dass** in dem Gehäuse (4) für die Antriebssegmente (21, 22, 23) eine Auflagefläche (27) vorgesehen ist, deren Breite größer als die Breite der jeweiligen Antriebssegmente (21, 22, 23) bemessen ist.

8. Spannvorrichtung nach einem der vorgenannten Ansprüche,
**dadurch gekennzeichnet,**
**dass** die Antriebssegmente (21, 22, 23) während der Drehbewegung des Betätigungselementes (11) eine Verschwenkbewegung um die Drehzapfen (17, 18) in Richtung des Betätigungselementes (11) ausführen.

9. Spannvorrichtung nach einem der vorgenannten Ansprüche,
**dadurch gekennzeichnet,**
**dass** die Seitenwand der Aufnahmeöffnung (5) im Eingangsbereich einen Zentrierkonus (28) aufweist und dass die Außenkontur der einzuspannenden Gegenstände (2) oder Trägerteile (3) an den Zentrierkonus (28) angepasst sein kann.

10. Spannvorrichtung nach Anspruch 9,
**dadurch gekennzeichnet,**
**dass** an dem jeweiligen freien Ende der Spannschieber (7, 8, 9) eine aus der Horizontalen geneigt verlaufende Spannfläche (29) vorgesehen ist, dass an dem einzuspannenden Gegenstand (2) oder dem Trägerteil (3) eine mit der Spannfläche (29) der jeweiligen Spannschieber (7, 8, 9) zusammenwirkende Spannebene (30) ausbildbar ist und dass durch die radiale Zustellung der Spannschieber (7, 8, 9) ein Wirkkontakt zwischen den Spannflächen (29) und der Spannebene (30) entstehen kann, derart, dass der einzuspannende Gegenstand (2) oder das Trägerteil (3) in die Aufnahmeöffnung (5) einpressbar und in axialer Richtung auf den Zentrierkonus (28) andrückbar ist.

11. Spannvorrichtung nach einem der vorgenannten Ansprüche,
**dadurch gekennzeichnet,**
**dass** die Spannschieber (7, 8, 9) in einem identischen Teilungswinkel zueinander beabstandet sind, der vorzugsweise 120° entspricht.

12. Spannvorrichtung nach einem der vorgenannten Ansprüche,
**dadurch gekennzeichnet,**
**dass** die Spannschieber (7, 8, 9) eine Mittelachse (19) aufweisen und dass die Symmetrieachse (34) des jeweiligen Antriebssegmentes (21, 22, 23) im Bereich der Mittelachse (19) angeordnet ist und während der Zustellbewegung der Spannschieber (7, 8, 9) zu der Mittelachse (19) um eine Wegstrecke (Δ₁, Δ₂) verschoben ist.

13. Spannvorrichtung nach einem der vorgenannten Ansprüche,
**dadurch gekennzeichnet,**
**dass** die Spannschieber (7, 8, 9) in der Bohrung (10) axial geführt gehalten sind, und dass der Verbund zwischen den jeweiligen Paaren von Spannschiebern (7, 8, 9) und Antriebssegmenten (21, 22, 23) in den jeweiligen Bohrungen (10) lageorientiert gehalten ist.

14. Spannvorrichtung nach einem der vorgenannten Ansprüche,
**dadurch gekennzeichnet,**
**dass** die Antriebszapfen (15, 16) drei Teilabschnitte (35, 36, 37) mit unterschiedlich groß bemessenen Durchmessern aufweisen, dass der erste Teilabschnitt (35) in den Gewindegang (13 oder 14) des Betätigungselementes (11) eingesetzt ist, dass der zweite Teilabschnitt (35) die beiden benachbarten Teilabschnitte (35, 37) nach außen überragt bzw. dieser übersteht und in einer in dem Gehäuse (4) eingearbeiteten Führungsnut (20) axial verschiebbar gelagert ist und dass der dritte Teilabschnitt (36) mit dem jeweiligen Antriebssegment (21 oder 22) verbunden ist.

## Claims

1. A zero point clamping device (1) for fixation of an object (2), in particular a workpiece, a tool or a palette, or a carrier element (3) to which the respective object (2) is mounted, centrically and with repeated precision, consisting of:
- a housing (4),
- a receiving opening (5) incorporated into the housing (4), which has a centering axis (6), to which the axis of symmetry (2' or 3') of the object (2) or the carrier element (3) can be aligned coaxially during the clamping process,
- at least two clamping slides (7, 8 or 9), each of which are supported in a bore (10) provided in the housing (4) in an axially displaceable manner, and which open into the receiving opening (5) during the state of clamping to thus be able to act upon and fix the object (2) or the carrier element (3),
- and of an actuator element (11) rotatably supported in the housing (4), by means of which the clamping slides (7, 8, 9) are movable, wherein a rotational axis (12) of the actuator element (11) extends tangentially and at a distance to the receiving opening (5),
wherein at least two drive segments (21, 22, 23) are floatingly supported in the housing (4), which extend around the centering axis (6) of the receiving opening (5) in an arch-shaped manner,
wherein each of the clamping slides (7, 8, 9) is connected to one of the drive segments (21, 22, 23),
**characterised in that**
- in the actuator element (11) two thread grooves (13, 14) are incorporated at a distance to one another, whose respective thread grooves (13, 14) have an identical pitch and are designed to be oppositely inclined to one another,
- that into each of the thread grooves (13, 14) a driving pin (15, 16) is inserted that is drivingly connected with the respective thread groove (13, 14) in such a manner that by means of the rotation of the actuator element (11) the drive pins (15, 16) are movable along the rotational axis (12) of the actuator element (11),
- that two of the drive segments (21, 22) are drivingly coupled with the actuator element (11) via one of the respective drive pins (15, 16),
- and that between the two drive segments (21, 22) connected with the actuator element (11) and the drive segments (21, 22 or 23) arranged adjacent thereto, one respective pivot pin (17, 18) is provided for forming a rotary joint.

2. The clamping device according to claim 1,
**characterised in that**
into the respective clamping slides (7, 8, 9) a receiving pocket (24) having a U-shaped design is incorporated, into which the respective drive segment (21, 22, 23) is inserted.

3. The clamping device according to claim 2,
**characterised in that**
the side wall (25, 26) of the receiving pocket (24) facing the respective drive segment (21, 22, 23) is curved in such a manner that the width of the receiving pocket (24) has a smaller dimension in the region of the central axis (19) of the clamping slides (7, 8, 9) than in the region of the circumferential surface.

4. The clamping device according to any of the preceding claims, **characterised in that**
the two thread grooves (13, 14) incorporated into the actuator element (11) have an identical length and that the length of the thread groove (13, 14) defines the stroke distance of the clamping slides (7, 8, 9).

5. The clamping device according to claim 4,
**characterised in that**
the length of the thread groove (13, 14) corresponds at a maximum to the complete revolution of the actuator element (11).

6. The clamping device according to any of the preceding claims,
**characterised in that**
the thread grooves (13, 14) have two different inclinations (ϕ₁, ϕ₂) with respect to the rotational axis (12) and that the inclination (ϕ₁) is assigned to the fast stroke of the clamping slides (7, 8, 9) and that the inclination (ϕ₂) is assigned to the clamping movement of the clamping slides (7, 8, 9).

7. The clamping device according to any of the preceding claims,
**characterised in that**
in the housing (4), for the drive segments (21, 22, 23) a support surface (27) is provided, the width whereof has a larger dimension than the width of the respective drive segments (21, 22, 23).

8. The clamping device according to any of the preceding claims,
**characterised in that**
during the rotational movement of the actuator element (11), the drive segments (21, 22, 23) carry out a pivoting movement around the pivot pins (17, 18) in the direction of the actuator element (11).

9. The clamping device according to any of the preceding claims,
**characterised in that**
the side wall of the receiving opening (5) has a centering cone (28) in the entrance region and that the outer contour of the objects (2) to be clamped or the carrier elements (3) can be adapted to the centering cone (28).

10. The clamping device according to claim 9,
**characterised in that**
at the respective free end of the clamping slides (7, 8, 9) a clamping surface (29) running in an inclined manner from the horizontal is provided, that at the object (2) to be clamped or the carrier element (3), a clamping plane (30) cooperating with the clamping surface (29) of the respective clamping slides (7, 8, 9) can be formed, and that through the radial feed of the clamping slides (7, 8, 9) an operative contact between the clamping surfaces (29) and the clamping plane (30) can be produced, such that the object (2) to be clamped or the carrier element (3) can be pressed into the receiving opening (5) and can be pressed onto the centering cone (28) in an axial direction.

11. The clamping device according to any of the preceding claims,
**characterised in that**
the clamping slides (7, 8, 9) are spaced with regard to one another in an identical angular pitch, which preferably corresponds to 120°.

12. The clamping device according to any of the preceding claims,
**characterised in that**
the clamping slides (7, 8, 9) have a central axis (19) and that the axis of symmetry (34) of the respective drive segment (21, 22, 23) is arranged in the region of the central axis (19) and that during the feed movement, the clamping slide (7, 8, 9) is displaced by a distance (Δ₁, Δ₂) with regard to the central axis (19).

13. The clamping device according to any of the preceding claims,
**characterised in that**
the clamping slides (7, 8, 9) are guided in an axial manner in the bore (10) and that the combination of respective pairs of clamping slides (7, 8, 9) and drive segments (21, 22, 23) is maintained in a positionoriented manner in the respective bore (10).

14. The clamping device according to any of the preceding claims,
**characterised in that**
the drive pins (15, 16) have three partial portions (35, 36, 37) of differing dimensions, that the first partial portion (35) is inserted into the thread groove (13 or 14) of the actuator element (11), that the second partial portion (35) protrudes from or projects the two adjacent partial portions (35, 37) outwardly being supported in a guide groove (20) incorporated into the housing (4) in an axially displaceable manner, and that the third partial portion (36) is connected with the respective drive segment (21 or 22).

## Revendications

1. Dispositif de serrage à point zéro (1) servant au positionnement centré et avec reproductibilité d'un objet (2), en particulier d'une pièce à usiner, d'un outil ou d'une palette, ou bien d'un élément de support (3), sur lequel est fixé l'objet respectif (2), comprenant :
- un boîtier (4),
- une ouverture de réception (5) pratiquée dans le boîtier (4), l'ouverture possédant un axe de centrage (6) sur lequel se laisse orienter en direction coaxiale l'axe de symétrie (2' ou 3') de l'objet (2) ou de l'élément de support (3) durant le serrage,
- avec au moins deux glissières de serrage (7, 8 ou 9) logées respectivement de manière axialement mobile dans un alésage (10) pratiqué dans le boîtier (4) et qui, lors du serrage, aboutissent dans l'ouverture de réception (5), agissant de ce fait sur l'objet (2) ou sur l'élément de support (3), et pouvant ainsi les fixer,
- et un élément d'actionnement (11) logé en rotation dans la boîtier (4), qui permet de mouvoir les glissières de serrage (7, 8, 9), l'un des axes de rotation (12) de l'élément d'actionnement (11) s'étirant tangentiellement par rapport et espacé de l'ouverture de réception (5),
où, dans le boîtier (4), il est logé au moins deux segments d'entraînement flottants (21, 22, 23) qui entourent en arc l'axe de centrage (6) de l'ouverture de réception (5),
où chaque glissière de serrage (7, 8, 9) est raccordée à un des segments d'entraînement (21, 22, 23),
**caractérisé en ce que**,
- dans l'élément d'actionnement (11), il est pratiqué deux spires (13, 14) espacés l'un de l'autre, les spires (13, 14) possédant des pas identiques opposés et inclinés l'un vers l'autre,
- que dans chaque spire (13, 14), il est inséré un téton d'entraînement (15, 16) qui est en liaison d'entraînement avec le spire respectif (13 ou 14), de sorte que moyennant la rotation de l'élément d'actionnement (11), les tétons d'entraînement (15, 16) se laissent mouvoir le long de l'axe de rotation (12) de l'élément d'actionnement (11),
- que par l'intermédiaire d'un des tétons d'entraînement respectifs (15, 16), deux des segments d'entraînement (21, 22) sont liés par entraînement à l'élément d'actionnement (11), et
- que, entre les deux segments d'entraînement (21, 22) liés à l'élément d'actionnement (11) et les segments d'entraînement voisins (21, 22 ou 23), il est prévu respectivement un pivot (17, 18) pour former une articulation tournante.

2. Dispositif de serrage d'après la revendication 1,
**caractérisé en ce que**
dans les glissières de serrage respectives (7, 8, 9), il est pratiqué une poche de réception sous la forme d'un U (24) dans laquelle est inséré le segment d'entraînement respectif (21, 22, 23).

3. Dispositif de serrage d'après la revendication 2,
**caractérisé en ce que**
la paroi latérale (25, 26) de la poche de réception (24) donnant sur le segment d'entraînement respectif (21, 22, 23) est courbée de sorte qu'au niveau de l'axe central (19) des glissières de serrage (7, 8, 9), la largeur de la poche de réception (24) est plus petite qu'au niveau de l'enveloppe.

4. Dispositif de serrage d'après une des revendications précédentes,
**caractérisé en ce que**
les deux spires (13, 14) pratiqués dans l'élément d'actionnement (11) possèdent une longueur identique et que la longueur du spire (13, 14) détermine la course de mouvement des glissières de serrage (7, 8, 9).

5. Dispositif de serrage d'après la revendication 4,
**caractérisé en ce que**
la longueur du spire (13, 14) correspond au maximum à un tour complet de l'élément d'actionnement (11).

6. Dispositif de serrage d'après une des revendications précédentes,
**caractérisé en ce que**,
référé à l'axe de rotation (12), les spires (13, 14) possèdent deux pas différents (ϕ1, ϕ2) et que le pas (ϕ1) est assigné à la course rapide des glissières de serrage (7, 8, 9) et le pas (ϕ2) est assigné au mouvement de serrage des glissières de serrage (7, 8, 9).

7. Dispositif de serrage d'après une des revendications précédentes,
**caractérisé en ce que**
dans le boîtier (4), il est prévu une face de portée (27) pour les segments d'entraînement (21, 22, 23), la largeur de laquelle est plus grande que la largeur des segments d'entraînement respectifs (21, 22, 23).

8. Dispositif de serrage d'après une des revendications précédentes,
**caractérisé en ce que**,
à la rotation de l'élément d'actionnement (11), les segments d'entraînement (21, 22, 23) décrivent un pivotement autour des tétons (17, 18) en direction de l'élément d'actionnement (11).

9. Dispositif de serrage d'après une des revendications précédentes,
**caractérisé en ce que**,
au niveau de l'entrée, la paroi latérale de l'ouverture de réception (5) possède un cône de centrage (28) et que le contour extérieur des objets (2) ou des éléments de support (3) à serrer peut être adapté au cône de centrage (28).

10. Dispositif de serrage d'après la revendication 9,
**caractérisé en ce que**
sur l'extrémité libre respective des glissières de serrage (7, 8, 9), il est prévu une face de serrage (29) inclinée par rapport à l'horizontale, que sur l'objet (2) ou sur l'élément de support (3) à serrer, il peut être prévu un plan de serrage (30) collaborant avec la face de serrage (29) des glissières de serrage respectives (7, 8, 9) et que, suite à l'avance radiale des glissières de serrage (7, 8, 9), il peut se produire un contact actif entre les faces de serrage (29) et le plan de serrage (30), de sorte que l'objet (2) ou l'élément de support (3) à serrer se laissent presser dans l'ouverture de réception (5) et qu'en direction axiale, ils se laissent presser sur le cône de centrage (28).

11. Dispositif de serrage d'après une des revendications précédentes,
**caractérisé en ce que**
les glissières de serrage (7, 8, 9) sont écartées l'une de l'autre sous un pas angulaire identique s'élevant de préférence à 120°.

12. Dispositif de serrage d'après une des revendications précédentes,
**caractérisé en ce que**
les glissières de serrage (7, 8, 9) possèdent un axe central (19) et que l'axe de symétrie (34) du segment d'entraînement respectif (21, 22, 23) est disposé au niveau de l'axe central (19), et décalé de (Δ1, Δ2) par rapport à l'axe central (19) au moment de l'avance des glissières de serrage (7, 8, 9).

13. Dispositif de serrage d'après une des revendications précédentes,
**caractérisé en ce que**
les glissières de serrage (7, 8, 9) sont guidées axialement dans l'alésage (10) et que l'ensemble formé par les paires respectives de glissières de serrage (7, 8, 9) et les segments d'entraînement (21, 22, 23) est retenu en position définie dans les alésages respectifs (10).

14. Dispositif de serrage d'après une des revendications précédentes,
**caractérisé en ce que**
les tétons d'entraînement (15, 16) possèdent trois sections (35, 36, 37) avec des diamètres différents, que la première section (35) est insérée dans le spire (13 ou 14) de l'élément d'actionnement (11), que la deuxième section (35) dépasse les deux sections voisines (35, 37) vers l'extérieur et qu'elle est logée de manière axialement mobile dans une rainure de guidage (20) pratiquée dans le boîtier (4) et que la troisième section (36) est raccordée au segment d'entraînement respectif (21 ou 22).
